# EUROPÄISCHE PATENTANMELDUNG

(11) **EP 4 623 762 A1**
(43) Veröffentlichungstag der Anmeldung: **01.10.2025**
(21) Anmeldenummer: 25164283.1
(22) Anmeldetag: 18.03.2025
(51) Int. Cl.: A47G 19/22, A47G 23/02, A47G 23/06

(54) **VORRICHTUNG ZUM STABILISIEREN EINES ODER MEHRERER GEGENSTÄNDE, INSBESONDERE VON GEFÄSSEN SOWIE KOMBINATION UMFASSEND ZUMINDEST EIN GEFÄSS UND EINE SOLCHE VORRICHTUNG**

(30) Priorität: 28.03.2024 DE 102024108896
(71) Anmelder: Zier, Jenny, 34302 Guxhagen (DE); Zier, Tim, 34302 Guxhagen (DE)
(72) Erfinder: Zier, Jenny, 34302 Guxhagen (DE); Zier, Tim, 34302 Guxhagen (DE)
(74) Vertreter: Walther Bayer Faber Patentanwälte PartGmbB

(57) **Zusammenfassung**

Vorrichtung (14) zum Stabilisieren eines oder mehrerer Gegenstände (12), umfassend einen flächigen Grundkörper (16) mit einer ersten Oberfläche (18) und einer zweiten Oberfläche (20), und zumindest eine im Grundkörper (16) angeordnete Magneteinheit (26) umfasst, welche mit dem Auflagekörper (34) zum Stabilisieren des auf der ersten Oberfläche (18) oder zweiten Oberfläche (20) abgestellten Gegenstands (12) zusammenwirkt, wobei die Magneteinheit (26) derart ausgebildet ist, dass sie an der ersten Oberfläche (18) eine erste Magnetkraft und an der zweiten Oberfläche (20) eine zweite Magnetkraft auf den Auflagekörper (34) ausübt, wobei die erste Magnetkraft und die zweite Magnetkraft unterschiedlich groß sind.

## Beschreibung

Die vorliegende Erfindung betrifft eine Vorrichtung zum Stabilisieren eines oder mehrerer Gegenstände, insbesondere von Gefäßen. Zudem betrifft die Erfindung eine Kombination umfassend zumindest ein Gefäß und eine solche Vorrichtung.

Gefäße werden vorwiegend dazu verwendet, um feste, fließfähige und flüssige Substanzen zu lagern. Hervorzuhebende Beispiele solcher Substanzen sind Lebensmittel wie Speisen und Getränke. Um die Lebensmittel zu sich zu nehmen, werden die Gefäße, insbesondere Becher, Tassen und Teller, in Griffweite der betreffenden Person auf eine Unterlage, beispielsweise auf einen Tisch, gestellt. Dabei kann es vorkommen, dass die Person unbeabsichtigt ein Gefäß berührt, welches infolgedessen entweder umfällt oder zumindest so stark ausgelenkt wird, dass der Inhalt ganz oder teilweise auf die Unterlage verschüttet wird, die nun mehr oder weniger aufwendig gereinigt werden muss. Insbesondere bei Personen mit geringer Koordinationsfähigkeit wie Kindern, Menschen mit Beeinträchtigungen oder älteren Personen, tritt diese Situation vermehrt auf.

Eine ähnliche Situation kann im Freien auftreten, wenn die Gefäße vom Wind umgeworfen werden, ohne dass es zu einer Berührung zwischen dem Gefäß und einer Person kommt. An Bord von Fahrzeugen, insbesondere von Schiffen, Flugzeugen und Zügen, können die Gefäße aufgrund von plötzlich auftretenden Beschleunigungen und Verzögerungen der Fahrzeuge umfallen.

Aus den Schriften US 6 179 377 B1, US 2013/0105492 A1 und DE 20 2005 001 031 U1 ist es bekannt, die Gefäße mit Magneten so auf einer Unterlage zu stabilisieren, dass die Gefahr des Umfallens vermindert wird. Die Verwendung der Magneten bewirkt, dass zwischen der Unterlage und dem Gefäß eine anziehende Kraft wirkt, welche das Gefäß gegen die Unterlage zieht und somit stabilisiert. Dabei kann aber die Situation auftreten, dass wirkende Kraft so groß ist, dass beispielsweise ein Kind nicht kräftig genug ist, um das Gefäß von der Unterlage zu lösen. Wenn die wirkende Kraft aber zu klein ist, ist die stabilisierende Wirkung ebenfalls gering, so dass die Gefahr des Umfallens in nur unzureichendem Umfang verringert werden kann.

Aufgabe einer Ausführungsform der vorliegenden Erfindung ist es, eine Vorrichtung bereitzustellen, mit welchem es mit einfachen Mitteln möglich ist, eine Abhilfe für die oben genannten Nachteile zu schaffen und insbesondere der körperlichen Verfassung der Person insbesondere hinsichtlich der Hebekraft, welche diese Person auf ein Gefäß aufbringen kann, Rechnung zu tragen. Des Weiteren liegt einer Ausgestaltung der vorliegenden Erfindung die Aufgabe zugrunde, eine Kombination zu schaffen, welche eine solche Vorrichtung umfasst.

Diese Aufgabe wird mit den in den Ansprüchen 1 und 14 angegebenen Merkmalen gelöst. Vorteilhafte Ausführungsformen sind Gegenstand der Unteransprüche.

Eine Ausführungsform der Erfindung betrifft eine Vorrichtung zum Stabilisieren eines oder mehrerer Gegenstände, insbesondere von Gefäßen, wobei der Gegenstand mit einem magnetisierten oder magnetisierbaren Auflagekörper verbindbar oder verbunden ist oder vom Auflagekörper gebildet wird, wobei die Vorrichtung
- einen flächigen Grundkörper mit einer ersten Oberfläche und einer zweiten Oberfläche, wobei
   o der Grundkörper mit der ersten Oberfläche oder der zweiten Oberfläche auf einer Unterlage ablegbar ist, und
   o der zu stabilisierende Gegenstand auf der ersten Oberfläche oder zweiten Oberfläche abstellbar ist, welche von der Unterlage weg zeigt, und
- zumindest eine im Grundkörper angeordnete Magneteinheit umfasst, welche
   o mit dem Auflagekörper zum Stabilisieren des auf der ersten Oberfläche oder zweiten Oberfläche abgestellten Gegenstands zusammenwirkt, wobei
   o die Magneteinheit derart ausgebildet ist, dass sie an der ersten Oberfläche eine erste Magnetkraft und an der zweiten Oberfläche eine zweite Magnetkraft auf den Auflagekörper ausübt, wobei die erste Magnetkraft und die zweite Magnetkraft unterschiedlich groß sind.

Unter einem flächigen Körper kann ein scheiben- oder plattenförmiger Körper verstanden werden, welcher sich in der ersten und zweiten Dimension deutlich stärker erstreckt als in der dritten Dimension. Dabei können die erste Oberfläche und die zweite Oberfläche parallel und beabstandet zueinander verlaufen.

Der Grundkörper ist dabei so gestaltet, dass er sowohl mit der ersten Oberfläche als auch mit der zweiten Oberfläche auf der Unterlage aufgelegt werden kann. Wird er mit der zweiten Oberfläche auf die Unterlage aufgelegt, zeigt die erste Oberfläche von der Unterlage weg und umgekehrt. Der zu stabilisierende Gegenstand, insbesondere das Gefäß, kann daher auf die erste Oberfläche des Grundkörpers abgestellt werden. In diesem Fall wirkt die Magneteinheit mit dem magnetisierten oder magnetisierbaren Auflagekörper des Gefäßes zusammen, wobei zwischen ihnen die erste Magnetkraft wirkt. Wird der Grundkörper gedreht und mit der ersten Oberfläche auf der Unterlage abgelegt, wirkt zwischen der Magneteinheit und dem Auflagekörper eine zweite Magnetkraft, die sich von der ersten Magnetkraft unterscheidet. Somit ist es allein durch Umdrehen des Grundkörpers möglich, unterschiedlich starke Magnetkräfte zwischen dem Grundkörper und dem Gefäß wirken zu lassen. Die erste Magnetkraft kann beispielsweise größer sein als die zweite Magnetkraft. Die geringere zweite Magnetkraft kann beispielsweise für Kleinkinder geeignet sein, die nur eine geringe Hebekraft auf das Gefäß aufbringen können, aber auch nur eine entsprechend geringe Kraft, die zum Umfallen des Gefäßes führen kann. Mit zunehmendem Alter des Kindes wächst aber auch die Hebekraft und die Kraft, die das Kind zum Umfallen auf das Gefäß aufbringen kann. Dies kann sinngemäß auch für ältere Menschen zutreffen. Dann kann der Grundkörper umgedreht werden, um die größere erste Magnetkraft zwischen dem Grundkörper und dem Gefäß wirken zu lassen, insbesondere, um ein Umfallen des Gefäßes zu verhindern und dennoch ein Lösen vom Grundkörper zu verhindern.

Nach Maßgabe einer weiteren Ausführungsform kann die Magneteinheit
- einen ersten Magneten, welcher der ersten Oberfläche zugeordnet ist und die erste Magnetkraft auf den Auflagekörper des auf die erste Oberfläche abgestellten Gegenstand ausübt, und
- einen zweiten Magneten umfassen, welcher der zweiten Oberfläche zugeordnet ist und die zweite Magnetkraft auf den Auflagekörper des auf die zweite Oberfläche abgestellten Gegenstand ausübt.

In dieser Ausführungsform umfasst die Magneteinheit zwei Magneten, nämlich den ersten Magnet und den zweiten Magnet. Der erste Magnet kann an der oder unmittelbar benachbart zur ersten Oberfläche und der zweite Magnet entsprechend an oder unmittelbar benachbart zur zweiten Oberfläche angeordnet werden. Dabei ist es nicht zwingend notwendig, dass der erste Magnet und der zweite Magnet fluchtend im Grundkörper angeordnet sind. Insofern ist man weitgehend frei in der Anordnung des ersten Magneten und des zweiten Magneten.

Der erste Magnet und der zweite Magnet sind dabei unterschiedlich stark, so dass die von ihnen auf den Auflagekörper ausgeübten Magnetkräfte ebenfalls unterschiedlich sind. Somit können auf einfache Weise je nach Anordnung des Grundkörpers auf der Unterlage zwei unterschiedlich große Magnetkräfte bereitgestellt werden.

Aufgrund der Tatsache, dass die Magnetkraft bereits bei einem geringen Abstand zwischen dem betreffenden Magnet und dem Auflagekörper stark nachlässt, ist die Magnetkraft des ersten Magneten an der gegenüberliegenden zweiten Oberfläche so gering, dass keine stabilisierende Wirkung mehr auf den Auflagekörper aufgebracht werden kann. Selbiges gilt im umgekehrten Fall für den zweiten Magneten.

In einer weitergebildeten Ausführungsform kann
- der erste Magnet bündig mit der ersten Oberfläche und/oder
- der zweite Magnet bündig mit der zweiten Oberfläche abschließen.

Wie erwähnt, ist die Magnetkraft sehr stark abhängig vom Abstand zwischen dem Magnet und dem Auflagekörper. Wenn beispielsweise der erste Magnet bündig mit der ersten Oberfläche abschließt, ist der Abfall der Magnetkraft sehr gering oder nicht vorhanden. Zudem entsteht keine Vertiefung, in welcher sich Schmutz ansammeln könnte und welche mit Material gefüllt werden müsste.

Bei einer weitergebildeten Ausführungsform kann die Magneteinheit einen Stabilisierungsmagneten aufweisen, welcher in einem ersten Abstand zur ersten Oberfläche und einem zweiten Abstand zur zweiten Oberfläche angeordnet ist oder angeordnet werden kann, wobei der erste Abstand und der zweite Abstand unterschiedlich groß sind.

In diesem Fall weist die Magneteinheit nur einen Magneten, nämlich den Stabilisierungsmagneten auf. Der Stabilisierungsmagnet ist so im Grundkörper angeordnet, dass er unterschiedliche Abstände zur ersten Oberfläche und zur zweiten Oberfläche aufweist. Mit anderen Worten ist der Stabilisierungsmagnet nicht mittig zwischen der ersten Oberfläche und der zweiten Oberfläche im Grundkörper angeordnet. Folglich unterscheidet sich die vom Stabilisierungsmagnet an der ersten Oberfläche induzierte erste Magnetkraft von der an der zweiten Oberfläche induzierten zweiten Magnetkraft, ohne dass zwei unterschiedlich starke Magnete benötigt werden.

Eine weitergebildete Ausführungsform kann sich dadurch auszeichnen, dass die Magneteinheit einen im Grundkörper angeordneten Hohlraum umfasst, in welchem der Stabilisierungsmagnet bewegbar angeordnet ist. Im Ausgangszustand liegt der Stabilisierungsmagnet infolge der Gewichtskraft an dem zur Unterlage hinweisenden Ende des Hohlraums an. Wird das Gefäß mit dem Auflagekörper auf dem Hohlraum platziert, so wirkt eine Anziehungskraft, die den Stabilisierungsmagnet zum von der Unterlage wegweisenden Ende des Hohlraums zieht. Die beiden zur ersten Oberfläche bzw. zur zweiten Oberfläche weisenden Enden des Hohlraums weisen unterschiedliche Abstände hierzu auf, so dass wiederum unterschiedlich starke Magnetkräfte zwischen dem Stabilisierungsmagnet und dem Auflagekörper wirken. Im Gegensatz zu einer festen Anordnung im Grundkörper kann der Stabilisierungsmagnet näher an den Auflagekörper herangeführt werden, weshalb eine bestimmte zwischen ihnen wirkende Magnetkraft mit einem schwächeren Stabilisierungsmagnet erreicht werden kann. Somit können die Kosten für den Stabilisierungsmagnet sowie der Ressourcenverbrauch, beispielsweise für Neodym, gering gehalten werden.

Bei einer weiteren Ausführungsform kann die Magneteinheit einen ersten Anschlag zum Festlegen des ersten Abstands und einen zweiten Anschlag zum Festlegen des zweiten Abstands umfassen. Um den Stabilisierungsmagnet in den Hohlraum einbringen zu können, muss dieser zunächst offen sein. Um jedoch zu verhindern, dass der Stabilisierungsmagnet aus dem Hohlraum herausfällt, können der erste Anschlag und der zweite Anschlag vorgesehen werden, die beispielsweise als in den Hohlraum einschraubbare oder einrastbare Deckel ausgeführt werden können. Diese Deckel weisen eine unterschiedliche Dicke auf, so dass ein unterschiedlicher Abstand zu den betreffenden Oberflächen und folglich unterschiedlich große Magnetkräfte bereitgestellt werden können.

Nach Maßgabe einer weiteren Ausführungsform kann die Magneteinheit eine Führungseinrichtung zum Führen des Stabilisierungsmagnets im Hohlraum aufweisen. Die Führungseinrichtung verhindert dabei ein Verkanten oder ein Verkippen des Stabilisierungsmagnets im Hohlraum, wodurch die zuverlässige Funktionsweise der Vorrichtung sichergestellt werden kann.

Bei einer weiteren Ausführungsform kann es sich anbieten, dass im Grundkörper ein Einschubschacht angeordnet ist, in welchen ein Einschubkörper zusammen mit der am Einschubkörper befestigbaren oder zu befestigenden Magneteinheit und/oder die Magneteinheit als solche einbringbar ist.

Je nach Material kann die Magneteinheit mit einem für die Herstellung des Grundkörpers verwendeten spritzgussfähigen Kunststoff umspritzt werden. Es kann aber auch vorgesehen sein, den Grundkörper aus Holz anzufertigen. In diesem Fall kann die Magneteinheit, insbesondere der Stabilisierungsmagnet, in eine von der ersten Oberfläche oder der zweiten Oberfläche ausgehende und in den Grundkörper eindringende Bohrung eingesetzt werden, wobei dann die Bohrung wieder mit einem Deckel oder Stopfen verschlossen werden muss. Es ist aber auch möglich, einen von der zwischen der ersten Oberfläche und der zweiten Oberfläche verlaufenden Randfläche ausgehenden Einschubschacht vorzusehen, der nicht verschlossen werden muss. Vielmehr kann ein Einschubkörper vorgesehen werden, der mit der Magneteinheit verbunden werden kann und der zusammen mit dieser in den Einschubschacht eingebracht und aus diesen wieder entfernt werden kann. Die Magneteinheit kann ausgetauscht werden, sofern sie defekt sein sollte. Zudem kann ein stärkerer oder schwächerer Stabilisierungsmagnet problemlos eingesetzt werden, wodurch die für die betreffende Person beste Magnetkraft bereitgestellt werden kann.

Es ist zudem möglich, die Magneteinheit als solche in den Einschubschacht einzubringen. Hierzu kann die Magneteinheit, insbesondere der Stabilisierungsmagnet, als ein Stabmagnet ausgebildet sein, welcher zur ersten Oberfläche und zur zweiten Oberfläche hin bündig mit dem Einschubschacht abschließen kann. Hierbei ist der Einschubschacht außermittig zwischen der ersten Oberfläche und der zweiten Oberfläche angeordnet. Im vollständig eingeschobenen Zustand kann der Stabmagnet seitlich etwas über den Einschubschacht überstehen, so dass der Stabmagnet einfach wieder aus dem Einschubschacht entnommen werden kann. Eines Einschubkörpers bedarf es in dieser Ausführungsform nicht.

Bei einer weiteren Ausführungsform kann im Grundkörper zumindest ein Befestigungsabschnitt zum Befestigen des Grundkörpers an einer Unterlage angeordnet sein. Wie erwähnt, ist die Unterlage üblicherweise ein Tisch. Allerdings kann die Unterlage beispielsweise auch eine Ablage eines Kindersitzes oder dergleichen sein. Mit dem Befestigungsabschnitt kann der Grundkörper derart mit dem Kindersitz verbunden werden, dass der Grundkörper nicht verrutscht oder vom Kindersitz fallen kann. Beispielsweise kann eine Schwalbenschwanz-Verbindung oder dergleichen verwendet werden, wodurch ein Befestigen und Lösen schnell und ohne zusätzliche Werkzeuge oder Verbindungsmittel ermöglicht wird.

Eine weitergebildete Ausführungsform kann sich dadurch auszeichnen, dass der Grundkörper zumindest einen Markierungsabschnitt zum Markieren der Position der Magneteinheit aufweist. Je nach Ausgestaltung ist die Magneteinheit von außen nicht sichtbar. Folglich muss man erst nach der korrekten Anordnung des Gefäßes auf dem Grundkörper suchen, um die stabilisierende Wirkung der Magneteinheit nutzen zu können. Mit der Markierung hingegen ist es möglich, die korrekte Anordnung intuitiv kenntlich zu machen. Dies kann beispielsweise mit einer kreis- oder ringförmigen Bemalung oder insbesondere bei Grundkörpern aus Holz mit entsprechend geformten Intarsien geschehen. Die Bemalung kann an die betreffende Person angepasst werden. Sie kann beispielsweise kind- oder altersgerecht sein.

Nach Maßgabe einer weiteren Ausführungsform kann der Grundkörper eine Vertiefung aufweisen, in welche ein Tischset, ein Platzset oder dergleichen einbringbar ist. Mit dem Tisch- oder Platzset kann der Grundkörper individualisiert und vor umgeschütteten Getränken oder dergleichen geschützt werden. Die Vertiefung sorgt dafür, dass die Tisch- oder Platzsets relativ zum Grundkörper in der gewünschten Stellung positioniert werden können und dort verbleiben. Es ist möglich, die zuvor erwähnten Markierungen nicht auf dem Grundkörper, sondern auf dem Tisch- oder Platzset anzuordnen. Hierzu ist es notwendig, dass das Tisch- oder Platzset in einer definierten Stellung relativ zum Grundkörper angeordnet werden kann, wozu die Vertiefung dienen kann, wenn diese komplementär zum Tisch- oder Platzset ausgebildet ist. Die Vertiefung kann Überstände aufweisen, unter welche das Platz- oder Tischset angeordnet und fixiert werden kann.

Bei einer weiteren Ausführungsform kann es sich anbieten, dass der Grundkörper eine Mulde aufweist, in welche ein Gegenstand, insbesondere ein zu stabilisierender Gegenstand einbringbar ist. Im Bereich der Mulde muss nicht zwangsläufig eine Magneteinheit angeordnet sein, wobei dies nicht ausgeschlossen ist. Mit der Mulde kann das Gefäß relativ zum Grundkörper in einer bestimmten Stellung positioniert werden. Zudem wird das Gefäß in gewissen Grenzen in dieser Stellung gehalten. Die Mulde kann folglich eine ähnliche Funktion wie die Markierung übernehmen. Die Mulde kann so gestaltet sein, dass Lebensmittel, beispielsweise Suppen, direkt in die Mulde gegeben werden können, ohne dass ein zu stabilisierender Gegenstand in die Mulde eingebracht wird. Die Mulde kann je nach Tiefe daher als tiefer Suppenteller oder flacher Teller verwendet werden. Auch in diesem Fall kann eine Magneteinheit im Bereich der Mulde angeordnet werden, so dass zumindest auf der gegenüberliegenden Oberfläche, die eben sein kann, ein zu stabilisierender Gegenstand positioniert werden kann.

Eine fortentwickelte Ausbildung kann vorgeben, dass der Grundkörper zumindest eine zwischen der ersten Oberfläche und der zweiten Oberfläche verlaufende Randfläche aufweist, an welcher Kopplungsmittel zum Koppeln des Grundkörpers mit einem weiteren Grundkörper angeordnet sind. Die Kopplungsmittel können beispielsweise Kopplungsvorsprünge und komplementär ausgestaltete Kopplungsausnehmungen aufweisen, so dass zwei Grundkörper nach Art von zwei Puzzleteilen formschlüssig miteinander verbunden werden können. Alternativ oder kumulativ können Magnete eingesetzt werden. Hierdurch können mehrere Personen, insbesondere Kinder, zu einer Gruppe zusammengefasst werden.

Nach Maßgabe einer fortentwickelten Ausbildung kann am Grundkörper eine Antirutsch-Einrichtung angeordnet sein. Insbesondere dann, wenn die wirkende Magnetkraft relativ groß ist und die Person die zum Lösen des Gefäßes notwendige Hebekraft nicht aufbringen kann, kann das Gefäß zunächst auf der betreffenden Oberfläche verschoben werden, wodurch der Abstand zur Magnetkraft vergrößert und die wirkende Magnetkraft verringert werden. Anschließend kann das Gefäß mit einer geringeren Hebekraft angehoben und vom Grundkörper gelöst werden. Beim Verschieben entlang der betreffenden Oberfläche kann aber die wirkende Magnetkraft so groß sein, dass nicht das Gefäß auf der betreffenden Oberfläche, sondern der Grundkörper auf der Unterlage verschoben wird. Die Antirutsch-Einrichtung kann diesem Effekt entgegenwirken.

Nach einer weitergebildeten Ausbildung ist die Antirutsch-Einrichtung als ein geschlossenes Gummiband ausgeführt oder umfasst dieses. Das geschlossene oder umlaufende Gummiband ist dabei so dimensioniert, dass es an die Dimensionen des Grundkörpers angepasst ist und mit einer gewissen Vorspannung auf diesen aufgeschoben werden kann. Der Grundkörper kann Positionierungsausnehmungen aufweisen, in welche das Gummiband eingebracht werden kann. Somit wird ein Verrutschen des Gummibands gegenüber dem Grundkörper verhindert. Ein Tisch- oder Platzset kann zwischen dem Grundkörper und dem Gummiband angeordnet werden, so dass das Tisch- oder Platzset in Bezug auf den Grundkörper mit dem Gummiband fixiert werden kann. Insofern hat das Gummiband zumindest zwei Funktionen, nämlich das Verrutschen des Grundkörpers gegenüber der Unterlage zu verhindern und das Platz- oder Tischset gegenüber dem Grundkörper zu fixieren.

Gemäß einer weiteren Ausbildung wird ein exzentrischer Abschnitt vom Grundkörper gebildet oder ist lösbar mit dem Grundkörper verbindbar. Hierdurch kann der Grundkörper individuell gestaltet werden. Insbesondere dann, wenn der exzentrische Abschnitt lösbar am Grundkörper befestigt werden kann, kann die Magnetkraft je nach Ausrichtung des exzentrischen Abschnitts gegenüber dem Grundkörper geändert werden, ohne dass der gesamte Grundkörper gedreht werden muss. Es können beispielsweise hinsichtlich Form und Farbe unterschiedlich gestaltete exzentrische Abschnitte am Grundkörper befestigt werden, wodurch eine weitere Individualisierung ermöglicht wird und die Person schnell die ihr zugeordnete Vorrichtung wiedererkennen kann. Es können mehrere Verbindungsabschnitte vorgesehen sein, an denen die exzentrischen Abschnitte am Grundkörper befestigt werden können. Es kann eine Art Baukasten bereitgestellt werden. Der Begriff "exzentrischer Abschnitt" bezieht sich dabei auf einen kreisrunden Grundkörper, was aber nicht ausschließt, dass ein exzentrischer Abschnitt auch mit einem anders geformten, insbesondere rechteckigen Grundkörper verbunden werden kann. Bei rechteckigen Grundkörpern kann der exzentrische Abschnitt als eine Erweiterung verwendet werden, auf welche ein zu stabilisierender Gegenstand abgestellt werden kann. Wenn es sich beim zu stabilisierenden Gegenstand um einen Becher handelt, kann vorgesehen sein, dass der exzentrische Abschnitt für Rechtshänder auf der rechten Seite und für Linkshänder auf der linken Seite des Grundkörpers angeordnet werden kann.

Eine Ausgestaltung der Erfindung betrifft eine Kombination umfassend
- zumindest ein Gefäß, welches mit einem magnetisierten oder magnetisierbaren Auflagekörper verbunden ist, und
- eine Vorrichtung nach einer der zuvor beschriebenen Ausbildungen.

Die technischen Effekte und Vorteile, die sich mit der vorschlagsgemäßen Kombination erreichen lassen, entsprechen im Wesentlichen denjenigen, die für die vorliegende Vorrichtung erörtert worden sind. Zusammenfassend sei darauf hingewiesen, dass es allein durch Umdrehen des Grundkörpers möglich ist, unterschiedlich starke Magnetkräfte zwischen dem Grundkörper und dem Gefäß wirken zu lassen.

In einer weiteren Ausgestaltung kann der Auflagekörper mittels eines doppelseitigen Klebebands mit dem Gefäß verbunden sein. Die im Grundkörper angeordnete Magneteinheit kann mindestens einen Dauermagnet aufweisen, während der Auflagekörper aus einem ferromagnetischen Stoff, beispielsweise Eisen, Nickel oder Cobalt oder ferromagnetische Legierungen, bestehen oder diese umfassen kann. Mit dem doppelseitigen Klebeband kann der Auflagekörper insbesondere am Boden des Gefäßes mit diesem verbunden werden. Doppelseitige Klebebänder sind auch in spülmaschinenfester Ausführung erhältlich, so dass der Auflagekörper zuverlässig mit dem Gefäß verbunden werden kann. Doppelseitige Klebebänder können auch eine flexible Schaumschicht aufweisen. Der Boden von Gefäßen weisen häufig konkave Wölbungen auf, während der Auflagekörper üblicherweise scheiben- oder plattenförmig und folglich eben ist. Die Abstandsunterschiede können mit der Schaumschicht ausgeglichen werden.

Beispielhafte Ausführungsformen der Erfindung werden im Folgenden unter Bezugnahme auf die beigefügten Zeichnungen näher erläutert. Es zeigen
Figuren 1A bis 1D verschiedene Ansichten eines ersten Ausführungsbeispiels einer erfindungsgemäßen Kombination aus Gefäßen und einer Vorrichtung zum Stabilisieren der Gefäße,
Figuren 2A und 2B ein zweites Ausführungsbeispiel einer erfindungsgemäßen Kombination,
Figuren 3A und 3B ein drittes Ausführungsbeispiel einer erfindungsgemäßen Kombination,
Figur 4 ein viertes Ausführungsbeispiel einer erfindungsgemäßen Kombination,
Figur 5A ein fünftes Ausführungsbeispiel einer erfindungsgemäßen Kombination in einer ersten Stellung,
Figur 5B das fünfte Ausführungsbeispiel in einer zweiten Stellung,
Figur 6 ein sechstes Ausführungsbeispiel einer erfindungsgemäßen Kombination, jeweils anhand von verschiedenen Ansichten, und
Figuren 7A und 7B ein siebtes Ausführungsbeispiel einer erfindungsgemäßen Kombination.

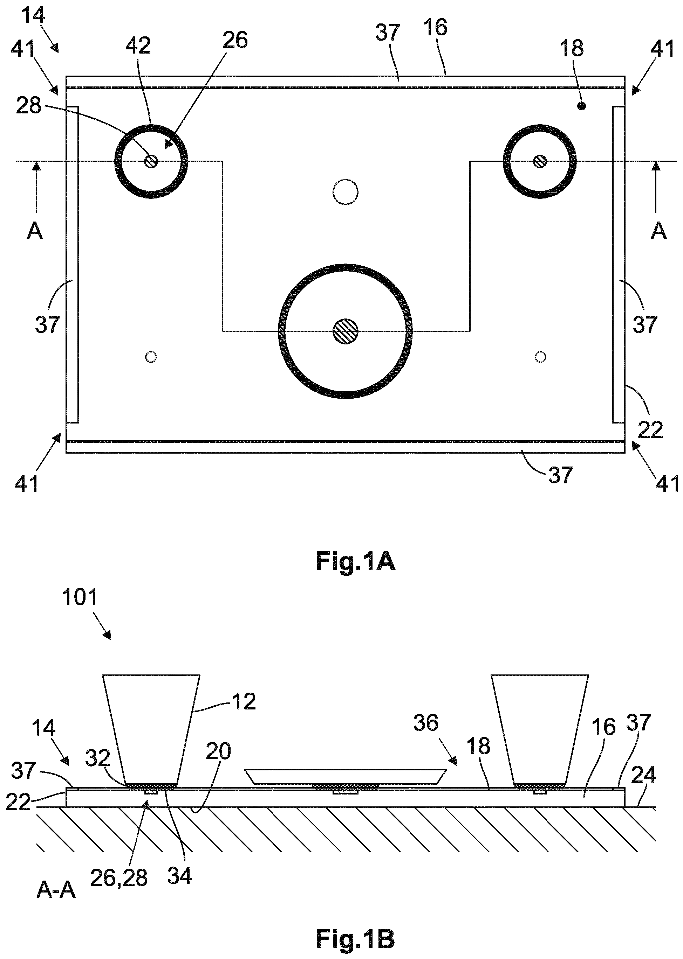

Die Figuren 1A bis 1D zeigen ein erstes Ausführungsbeispiel einer erfindungsgemäßen Kombination 101, welche zu stabilisierende Gegenstände 12, insbesondere von Gefäßen 12, und eine Vorrichtung 14 zum Stabilisieren solcher Gegenstände 12 umfasst.

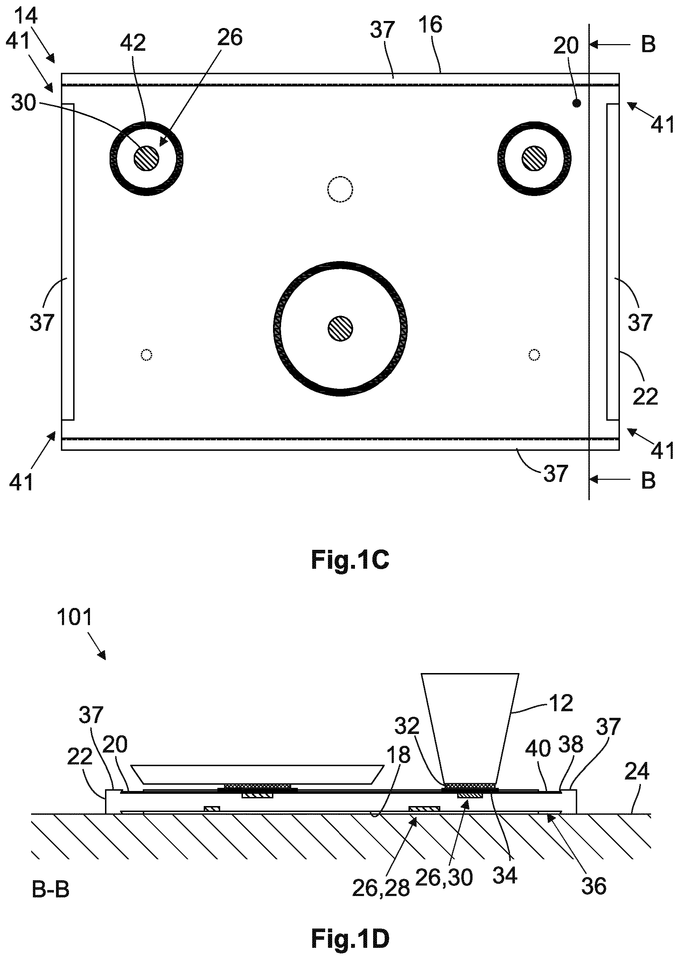

Die Vorrichtung 14 weist einen scheiben- oder plattenförmigen, flächigen Grundkörper 16 mit einer ersten Oberfläche 18 und einer zweiten Oberfläche 20 auf. Die erste Oberfläche 18 und die zweite Oberfläche 20 verlaufen parallel und beabstandet zueinander (siehe insbesondere Figur 1B). Der Grundkörper 16 hat in der Draufsicht (siehe Figuren 1A und 1C) eine rechteckige Form und bildet vier Randflächen 22, welche zwischen der ersten Oberfläche 18 und der zweiten Oberfläche 20 verlaufen. Aus der Figur 1B, welche die Vorrichtung 14 entlang der in Figur 1A definierten Schnittebene A-A zeigt, und aus Figur 1D, welche die Vorrichtung 14 entlang der in Figur 1C definierten Schnittebene B-B zeigt, ist ersichtlich, dass der Grundkörper 16 mit der zweiten Oberfläche 20 (Figuren 1A und 1B) oder mit der ersten Oberfläche 18 (Figuren 1C und 1D) auf einer Unterlage 24, insbesondere auf einem Tisch, abgelegt werden kann.

Die Vorrichtung 14 weist insgesamt drei Magneteinheiten 26 auf, welche gemäß dem ersten Ausführungsbeispiel jeweils einen ersten Magnet 28 und einen zweiten Magnet 30 umfassen (siehe insbesondere Figur 1D). Der erste Magnet 28 und der zweite Magnet 30 schließen jeweils bündig mit der ersten Oberfläche 18 bzw. mit der zweiten Oberfläche 20 ab, sind aber bezogen auf eine Senkrechte zur ersten Oberfläche 18 und zweiten Oberfläche 20 nicht fluchtend, sondern etwas versetzt zueinander angeordnet.

Aus den Figuren 1B und 1D ist erkennbar, dass die Gefäße 12 mittels eines doppelseitigen Klebebands 32 an ihrem Boden mit jeweils einem Auflagekörper 34 verbunden sind, der aus einem magnetischen oder magnetisierten Material, insbesondere aus einem ferromagnetischen Material, besteht oder dieses Material umfasst. Die Magneteinheit 26 ist so ausgebildet, dass sie an der ersten Oberfläche 18 (siehe Figur 1B) eine erste Magnetkraft auf den Auflagekörper 34 und an der zweiten Oberfläche 20 (siehe Figur 1D) eine zweite Magnetkraft auf den Auflagekörper 34 ausübt, die sich voneinander unterscheiden. Hierzu ist der erste Magnet 28 stärker ausgebildet als der zweite Magnet 30, so dass die an der ersten Oberfläche 18 zwischen dem ersten Magnet 28 und dem Auflagekörper 34 wirkende erste Magnetkraft größer ist als die an der zweiten Oberfläche 20 hierzwischen wirkende zweite Magnetkraft ist. Aufgrund dieser Magnetkräfte werden die Gefäße 12 an den Grundkörper 16 herangezogen und folglich gegen Umkippen stabilisiert, allerdings in unterschiedlichem Maße.

Vergleicht man insbesondere die Figuren 1A und 1C, so erkennt man, dass der Grundkörper 16 um eine parallel zur Schnittebene A-A verlaufende Drehachse gedreht worden ist. Infolgedessen liegt der Grundkörper 16 nicht mehr mit der zweiten Oberfläche 20, sondern mit der ersten Oberfläche 18 auf der Unterlage 24 auf. Daher wirkt nicht mehr die erste Magnetkraft, sondern die zweite Magnetkraft auf den Auflagekörper 34. Mit einer entsprechenden Drehung kann daher ausgewählt werden, ob die stärkere erste Magnetkraft oder die schwächere zweite Magnetkraft auf den Auflagekörper 34 wirken soll. Entsprechend schwerer oder einfacher ist es, das Gefäß 12 vom Grundkörper 16 zu lösen.

Aus Figur 1D ist zudem erkennbar, dass der Grundkörper 16 sowohl auf der ersten Oberfläche 18 als auch auf der zweiten Oberfläche 20 jeweils eine Vertiefung 36 aufweist. Die Vertiefung 36 wird im ersten Ausführungsbeispiel von vier Randabschnitten 37 begrenzt, von denen der obere und die untere Randabschnitt 37 jeweils einen schräg verlaufenden Überstand 38 zur Vertiefung 36 hin bilden, unter den ein Platz- oder Tischset 40 oder dergleichen geklemmt werden kann, welches hierdurch fixiert wird. Wie insbesondere aus den Figuren 1A und 1C hervorgeht, ist die Vertiefung 36 nicht vollständig von den Randabschnitten 37 umgeben. Vielmehr sind insgesamt vier Unterbrechungen 41 vorhanden. Diese Unterbrechungen 41 erleichtern die Entnahme der Platz- oder Tischsets 40 aus der Vertiefung 36, da man den Finger oder einen flachen Gegenstand unter das Platz- oder Tischset 40 bringen und das Platz- oder Tischset 40 anschließend zum Entnehmen anheben kann. Die Anzahl der Unterbrechungen 41 kann aber weitgehend frei gewählt werden. Prinzipiell genügt eine Unterbrechung 41. Diese kann so angeordnet werden, dass diese im Gebrauch der Vorrichtung 14 für den Benutzer schwer zugänglich ist, beispielsweise an der vom Benutzer abgewandten Randfläche 22. Hierdurch kann der Benutzer, insbesondere ein Kind, davon abgehalten werden, das Platz- oder Tischset 40 aus der Vertiefung 36 zu heben, wodurch die zu stabilisierenden Gegenstände 12 umfallen könnten.

Ferner ist aus den Figuren 1A und 1C erkennbar, dass die Vorrichtung 14 mit Markierungsabschnitten 42 versehen ist, welche die Position der ersten Magnete 28 an der ersten Oberfläche 18 bzw. die Position der zweiten Magnete 30 an der zweiten Oberfläche 20 kennzeichnen.

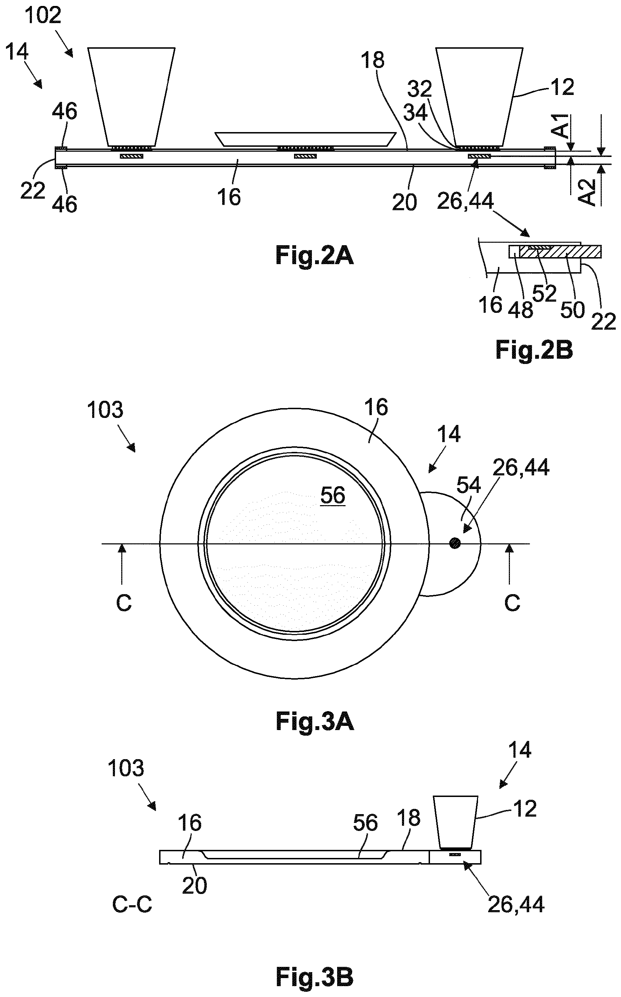

In der Figur 2A ist ein zweites Ausführungsbeispiel der erfindungsgemäßen Kombination 102 anhand einer prinzipiellen Seitenansicht dargestellt. Im Gegensatz zum ersten Ausführungsbeispiel weist die Magneteinheit 26 nur einen Stabilisierungsmagneten 44 auf, der in einem ersten Abstand A1 zur ersten Oberfläche 18 und einen zweiten Abstand A2 zur zweiten Oberfläche 20 angeordnet ist, wobei sich der erste Abstand A1 vom zweiten Abstand A2 unterscheidet. Aufgrund des unterschiedlichen Abstands wird auf der ersten Oberfläche 18 eine andere Magnetkraft auf den Auflagekörper 34 als auf der zweiten Oberfläche 20. Auch hier kann infolge eines Drehens des Grundkörpers derart, dass er nicht mehr mit der ersten Oberfläche 18, sondern mit der zweiten Oberfläche 20 oder umgekehrt auf der Unterlage 24 aufliegt, die auf den Auflagekörper 34 wirkende Magnetkraft geändert werden.

An den jeweiligen Rändern der ersten Oberfläche 18 und der zweiten Oberfläche 20 sind Antirutsch-Einrichtungen 46 angeordnet, welche einem Verrutschen des Grundkörpers auf der Unterlage 24 entgegenwirken. Die Antirutsch-Einrichtung 46 kann ein Antirutschband oder einen Antirutschbelag aufweisen.

Zudem ist in Figur 2B erkennbar, dass der Grundkörper 16 einen von der Randfläche 22 ausgehenden Einschubschacht 48 aufweist. Ein Einschubkörper 50 weist eine Aufnahme 52 für den Stabilisierungsmagneten 44 auf, so dass dieser zusammen mit dem Einschubkörper 50 in den Einschubschacht 48 eingeschoben und aus diesem wieder entfernt werden kann.

Figuren 3A und 3B zeigen ein drittes Ausführungsbeispiel der erfindungsgemäßen Kombination 103. Der wesentliche Unterschied zum ersten und zweiten Ausführungsbeispiel liegt darin, dass der Grundkörper 16 nicht rechteckig, sondern im Wesentlichen kreisförmig ist und einen exzentrischen Abschnitt 54 aufweist, in welchem die Magneteinheit 26 angeordnet ist. Wie auch im zweiten Ausführungsbeispiel umfasst die Magneteinheit 26 einen Stabilisierungsmagneten 44, der zur ersten Oberfläche 18 einen anderen Abstand als zur zweiten Oberfläche 20 aufweist.

Der exzentrische Abschnitt 54 ist im dritten Ausführungsbeispiel der Kombination 103 einteilig mit dem Grundkörper 16 ausgeführt. Nicht dargestellt ist ein Ausführungsbeispiel, in welchem der exzentrische Abschnitt 54 lösbar am Grundkörper 16 befestigt werden kann und somit ein separates Bauteil darstellt. Dies kann beispielsweise mittels eines Formschlusses geschehen, bei welchem Verbindungsvorsprünge in komplementär gestaltete Verbindungsausnehmungen eingreifen. Der Verbindungsabschnitt kann so gestaltet werden, dass der exzentrische Abschnitt 54 gegenüber dem Grundkörper 16 um 180° gedreht am Grundkörper 16 befestigt werden kann. Infolgedessen kann wie oben beschrieben die vom Stabilisierungsmagnet 44 auf den zu stabilisierenden Gegenstand aufgeprägte Magnetkraft gewählt werden. Es muss nur der exzentrische Abschnitt 54 gedreht werden, nicht der gesamte Grundkörper 16.

Es können auch mehrere Verbindungsabschnitte vorgesehen sein, so dass mehrere exzentrische Abschnitte 54 am Grundkörper 16 befestigt werden können. Die exzentrischen Abschnitte 54 können dabei unterschiedlich geformt sein. In Figur 3A ist der exzentrische Abschnitt 54 einem Kreis angenähert, es ist aber auch möglich, dass der exzentrische Abschnitt ellipsenförmig, dreieckförmig oder ganz andere Formen aufweist. Es kann daher eine Art Bausatz bereitgestellt werden. Der Grundkörper 16 kann so individuell gestaltet werden, so dass die Personen, welche die Vorrichtung 14 nutzen, schnell den ihnen zugeordneten Grundkörper 16 erkennen können.

Zudem ist im Grundkörper 16 eine Mulde 56 angeordnet, in welche ein Gefäß 12, insbesondere ein Teller, eingebracht und somit vorpositioniert werden kann. Zudem wird der Teller in gewissen Grenzen gegen Verrutschen gesichert. In die Mulde 56 können aber auch Lebensmittel direkt eingebracht werden. Je nach Tiefe kann die Mulde 56 nach Art eines flachen oder tiefen Tellers verwendet werden. Bei ausreichender Tiefe kann die Mulde 56 mit Suppen befüllt werden. Nicht dargestellt ist eine Ausführungsform, bei welcher eine Magneteinheit 26 im Bereich der Mulde 56 angeordnet ist.

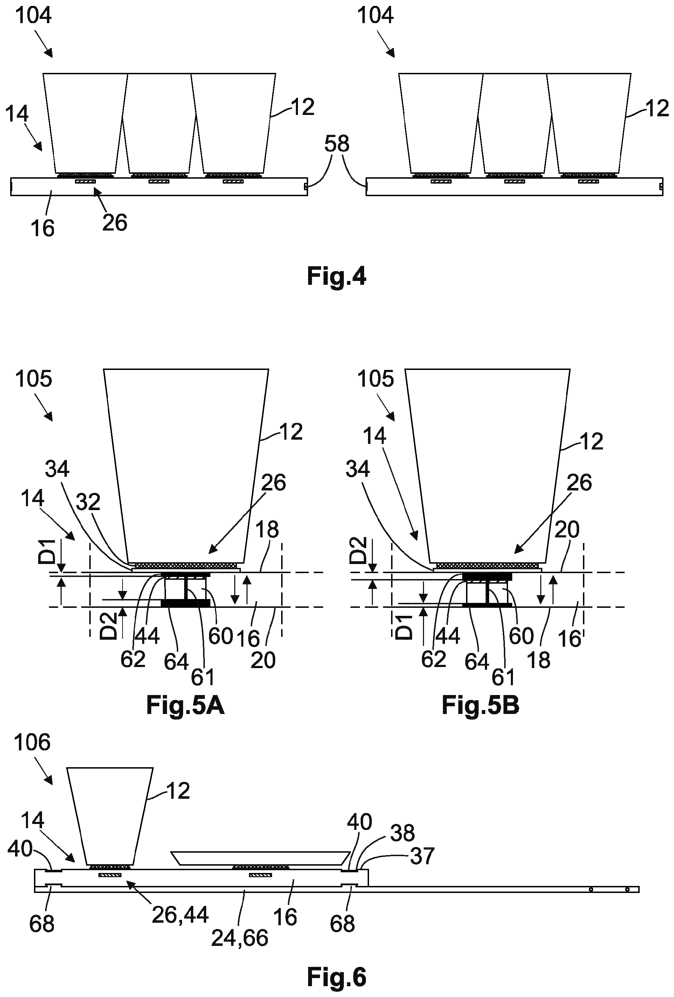

Figur 4 zeigt zwei erfindungsgemäße Kombinationen 104 nach einem vierten Ausführungsbeispiel. Die Kombinationen entsprechen weitgehend derjenigen nach dem zweiten Ausführungsbeispiel, jedoch weisen die Grundkörper 16 ein Kopplungsmittel 58 auf, mit welchem zwei Grundkörper 16 miteinander gekoppelt werden können. Im dargestellten Ausführungsbeispiel umfassen die Kopplungsmittel 58 Kupplungsmagneten, die an der Randfläche 22 des Grundkörpers angeordnet sind. Alternativ können komplementär zueinander ausgebildete Vorsprünge und Ausnehmungen vorgesehen sein, welche formschlüssig ineinander eingebracht werden können (nicht gezeigt). Die Grundkörper 16 können zur eindeutigen Zuordnung zu einer Person entsprechend markiert sein, beispielsweise mittels einer individuellen Bemalung oder Formgebung. Alternativ oder kumulativ können Buchstaben oder Zahlen verwendet werden. Dies kann dann sinnvoll sein, wenn mehrere Personen zu einer Gruppe oder Mannschaft zusammengeschlossen sind, beispielsweise bei einem Kindergeburtstag, jedes Gruppenmitglied aber seinen eigenen Grundkörper 16 innerhalb der miteinander verbundenen Grundkörper 16 schnell erkennen können soll.

Die in den Figuren 3A bis 4 gezeigten Ausführungsbeispiele der erfindungsgemäßen Kombination 103, 104 weisen keine Antirutsch-Einrichtung 46 auf. Es ist jedoch ohne weiteres möglich, auch diese Kombinationen 103, 104 mit einer solchen Antirutsch-Einrichtung 46 zu versehen.

Figur 5A zeigt ein fünftes Ausführungsbeispiel einer erfindungsgemäßen Kombination 105 in einer ersten Stellung, in welcher das Gefäß 12 auf der ersten Oberfläche 18 des Grundkörpers abgestellt ist, und in Figur 5B in einer zweiten Stellung, in welcher das Gefäß 12 auf der zweiten Oberfläche 20 abgestellt ist.

Die Magneteinheit 26 umfasst einen im Grundkörper 16 angeordneten Hohlraum 60, in welchem der Stabilisierungsmagnet 44 bewegbar angeordnet ist. Der Stabilisierungsmagnet 44 kann entlang einer stangenförmigen Führungseinrichtung 61 verschoben werden. Die Bewegbarkeit wird von einem ersten Anschlag 62 zur ersten Oberfläche 18 hin und von einem zweiten Anschlag 64 zur zweiten Oberfläche 20 hin begrenzt. Im dargestellten fünften Ausführungsbeispiel der Kombination 105 wird der erste Anschlag 62 von einem ersten Deckel und der zweite Anschlag 64 von einem zweiten Deckel gebildet, die jeweils bündig mit der ersten Oberfläche 18 bzw. mit der zweiten Oberfläche 20 abschließen. Der erste Deckel weist eine erste Dicke D1 auf, die geringer ist als eine zweite Dicke D2 des zweiten Deckels. In der Ausgangsstellung, in welcher kein Gefäß 12 auf dem Grundkörper 16 oder zumindest in der Nähe der Magneteinheit 26 abgestellt ist, liegt der Stabilisierungsmagnet 44 aufgrund der auf ihn einwirkenden Schwerkraft auf dem zur Unterlage 24 hinweisenden Ende des Hohlraums 60 auf (nicht gezeigt). Wird nun ein Gefäß 12 oberhalb der Magneteinheit 26 auf die erste Oberfläche 18 oder auf die zweite Oberfläche 20 gestellt, so bildet sich eine anziehende Wirkung zwischen dem Stabilisierungsmagneten 44 und dem Auflagekörper 34 aus, infolgedessen der Stabilisierungsmagnet 44 zum Auflagekörper 34 hin bewegt wird. In Figur 5A ist das Gefäß 12 auf der ersten Oberfläche 18 des Grundkörpers 16 und in Figur 5B auf der zweiten Oberfläche 20 abgestellt. Wie erwähnt, ist die erste Dicke D1 des ersten Deckels geringer als die zweite Dicke D2 des zweiten Deckels. Infolgedessen kann sich der Stabilisierungsmagnet 44 in dem Fall, dass das Gefäß 12 auf der ersten Oberfläche 18 abgestellt wird (Figur 5A), dem Auflagekörper 34 weiter annähern als in dem Fall, dass das Gefäß 12 auf der zweiten Oberfläche 20 abgestellt wird (Figur 5B). Aufgrund des geringeren Abstands im ersten Fall wirkt eine größere Magnetkraft auf den Auflagekörper 34 als aufgrund des größeren Abstands im zweiten Fall.

Figur 6 zeigt ein sechstes Ausführungsbeispiel der erfindungsgemäßen Kombination 106, welche weitgehend dem zweiten Ausführungsbeispiel der Kombination 102 entspricht. Wie erwähnt, weist der Grundkörper 16 die Randabschnitte 37 auf, welche einen zur Vertiefung 36 hin schräg verlaufenden Überstand 38 bilden. In Figur 6 ist erkennbar, dass die Unterlage 24 zwei schienenförmige Erhöhungen 68 aufweist, die mit komplementär zum Überstand 38 verlaufenden Schrägflächen versehen sind. Die Erhöhungen 68 können nach Art einer Schwalbenschwanzverbindung mit den Randabschnitten 37 verbunden werden, wodurch der Grundkörper 16 formschlüssig mit der Unterlage 24 verbunden werden kann. Die Unterlage 24 ist im sechsten Ausführungsbeispiel als eine Adapterplatte 66 ausgebildet, welche beispielsweise mit einem hier nicht gezeigten Kinderstuhl oder einem Tisch verschraubt oder auf andere Weise verbunden werden kann.

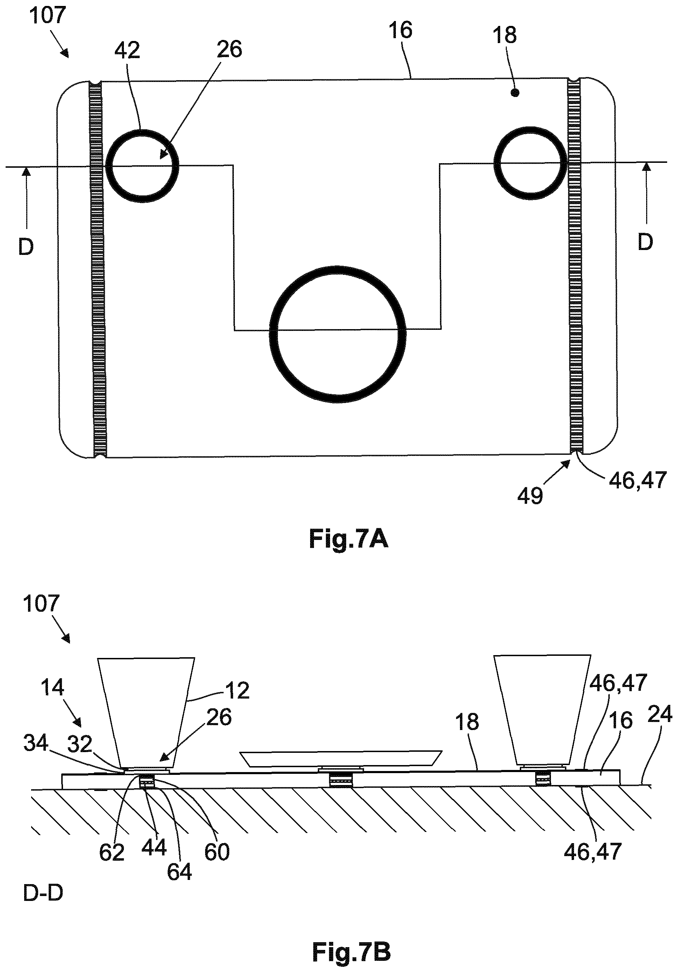

Figuren 7A und 7B zeigen ein siebtes Ausführungsbeispiel der erfindungsgemäßen Kombination 107, welche weitgehend dem in den Figuren 5A und 5B gezeigten fünften Ausführungsbeispiel der Kombination 105 entspricht. Allerdings ist die Magneteinheit 26 etwas anders aufgebaut. Während die Magneteinheit 26 gemäß dem fünften Ausführungsbeispiel der erfindungsgemäßen Kombination 105 die beschriebene Führungseinrichtung 61 aufweist, ist diese in der Magneteinheit 26 des siebten Ausführungsbeispiels der erfindungsgemäßen Kombination 107 nicht vorhanden. Der Stabilisierungsmagnet 44 ist so ausgeführt, dass ein Verkippen des Stabilisierungsmagnets 44 innerhalb des Hohlraums 60 verhindert wird.

Während der Hohlraum 60 im fünften Ausführungsbeispiel der Kombination 105 von einer Durchgangsbohrung gebildet wird, welche an beiden Enden mit Deckeln mit unterschiedlicher Dicke D1 und D2 verschlossen ist. Ist im siebten Ausführungsbeispiel der Kombination 107 der Hohlraum 60 nach Art einer Sacklochbohrung ausgestaltet, die nur mit einem Deckel verschlossen werden muss. Der Deckel weist eine Dicke auf, welche sich vom Abstand zwischen dem Grund des Hohlraums 60 und der benachbart angeordneten Oberfläche 18, 20 unterscheidet.

Zudem ist die Antirutsch-Einrichtung 46, mit welcher ein Verrutschen des Grundkörpers 16 auf der Unterlage 24 verhindert werden kann, als ein umlaufendes, geschlossenes Gummiband 47 ausgeführt. Zum Positionieren des Gummibands 47 ist der Grundkörper 16 an seinen Seitenflächen mit entsprechend geformten Positionierungsausnehmungen 49 versehen. Beispielsweise in Figur 1D ist das Platz- oder Tischset 40 gezeigt, welches im dort gezeigten ersten Ausführungsbeispiel 101 mit der Vertiefung 36 im Grundkörper 16 positioniert wird. Das Platz- oder Tischset 40 kann zwischen der Oberfläche 18 und dem Gummiband 47 positioniert werden (in den Figuren 7A und 7B nicht dargestellt), so dass ein Verrutschen des Platz- oder Tischsets 40 vom Gummiband 47 verhindert wird, ohne dass der Grundkörper 16 mit der Vertiefung 36 versehen werden muss.

Grundsätzlich können sämtliche gezeigten Ausführungsbeispiele der Kombination 101 - 107 mit einer Antirutsch-Einrichtung 46 versehen werden, die auch das zuvor beschriebene Gummiband 47 umfassen kann.

### Bezugszeichenliste

- 101 - 107: Kombination
- 12: Gegenstand, Gefäß
- 14: Vorrichtung
- 16: Grundkörper
- 18: erste Oberfläche
- 20: zweite Oberfläche
- 22: Randfläche
- 24: Unterlage
- 26: Magneteinheit
- 28: erster Magnet
- 30: zweiter Magnet
- 32: doppelseitiges Klebeband
- 34: Auflagekörper
- 36: Vertiefung
- 37: Randabschnitt
- 38: Überstand
- 40: Platz- oder Tischset
- 41: Unterbrechung
- 42: Markierungsabschnitt
- 44: Stabilisierungsmagnet
- 46: Antirutsch-Einrichtung
- 47: Gummiband
- 48: Einschubschacht
- 49: Positionierungsausnehmung
- 50: Einschubkörper
- 52: Aufnahme
- 54: exzentrischer Abschnitt
- 56: Mulde
- 58: Kopplungsmittel
- 60: Hohlraum
- 61: Führungseinrichtung
- 62: erster Anschlag
- 64: zweiter Anschlag
- 66: Adapterplatte
- 68: Erhöhungen

- A1: erster Abstand
- A2: zweiter Abstand
- D1: erste Dicke
- D2: zweite Dicke

## Patentansprüche

1. Vorrichtung (14) zum Stabilisieren eines oder mehrerer Gegenstände (12), insbesondere von Gefäßen (12), wobei der Gegenstand (12) mit einem magnetisierten oder magnetisierbaren Auflagekörper (34) verbindbar oder verbunden ist oder vom Auflagekörper (34) gebildet wird, wobei die Vorrichtung (14)
- einen flächigen Grundkörper (16) mit einer ersten Oberfläche (18) und einer zweiten Oberfläche (20), wobei
o der Grundkörper (16) mit der ersten Oberfläche (18) oder der zweiten Oberfläche (20) auf einer Unterlage (24) ablegbar ist, und
o der zu stabilisierende Gegenstand (12) auf der ersten Oberfläche (18) oder zweiten Oberfläche (20) abstellbar ist, welche von der Unterlage (24) weg zeigt, und
- zumindest eine im Grundkörper (16) angeordnete Magneteinheit (26) umfasst, welche
o mit dem Auflagekörper (34) zum Stabilisieren des auf der ersten Oberfläche (18) oder zweiten Oberfläche (20) abgestellten Gegenstands (12) zusammenwirkt, wobei
o die Magneteinheit (26) derart ausgebildet ist, dass sie an der ersten Oberfläche (18) eine erste Magnetkraft und an der zweiten Oberfläche (20) eine zweite Magnetkraft auf den Auflagekörper (34) ausübt, wobei die erste Magnetkraft und die zweite Magnetkraft unterschiedlich groß sind.

2. Vorrichtung (14) nach Anspruch 1,
**dadurch gekennzeichnet, dass** die Magneteinheit (26)
- einen ersten Magneten (28), welcher der ersten Oberfläche (18) zugeordnet ist und die erste Magnetkraft auf den Auflagekörper (34) des auf die erste Oberfläche abgestellten Gegenstand ausübt, und
- einen zweiten Magneten (30) umfasst, welcher der zweiten Oberfläche (20) zugeordnet ist und die zweite Magnetkraft auf den Auflagekörper (34) des auf die zweite Oberfläche abgestellten Gegenstand ausübt.

3. Vorrichtung (14) nach Anspruch 2,
**dadurch gekennzeichnet, dass**
- der erste Magnet (28) bündig mit der ersten Oberfläche (18) und/oder
- der zweite Magnet (30) bündig mit der zweiten Oberfläche (20) abschließt.

4. Vorrichtung (14) nach Anspruch 1,
**dadurch gekennzeichnet, dass** die Magneteinheit (26) einen Stabilisierungsmagnet (44) aufweist, welcher in einem ersten Abstand (A1) zur ersten Oberfläche (18) und einem zweiten Abstand (A2) zur zweiten Oberfläche (20) angeordnet ist oder angeordnet werden kann, wobei der erste Abstand (A1) und der zweite Abstand (A2) unterschiedlich groß sind.

5. Vorrichtung (14) nach Anspruch 4,
**dadurch gekennzeichnet, dass** die Magneteinheit (26) einen im Grundkörper (16) angeordneten Hohlraum (60) umfasst, in welchem der Stabilisierungsmagnet (44) bewegbar angeordnet ist.

6. Vorrichtung (14) nach Anspruch 5,
**dadurch gekennzeichnet, dass** die Magneteinheit (26) einen ersten Anschlag (62) zum Festlegen des ersten Abstands und einen zweiten Anschlag (64) zum Festlegen des zweiten Abstands umfasst.

7. Vorrichtung (14) nach einem der Ansprüche 5 oder 6, **dadurch gekennzeichnet, dass** die Magneteinheit (26) eine Führungseinrichtung (61) zum Führen des Stabilisierungsmagnets (44) im Hohlraum (60) aufweist.

8. Vorrichtung (14) nach einem der vorherigen Ansprüche, **dadurch gekennzeichnet, dass** im Grundkörper (16) ein Einschubschacht (48) angeordnet ist, in welchen
- ein Einschubkörper (50) zusammen mit der am Einschubkörper befestigbaren Magneteinheit (26) und/oder
- die Magneteinheit (26) als solche
einbringbar ist.

9. Vorrichtung (14) nach einem der vorherigen Ansprüche, **dadurch gekennzeichnet, dass** im Grundkörper (16) zumindest ein Befestigungsabschnitt (66) zum Befestigen des Grundkörpers an einer Unterlage (24) angeordnet ist.

10. Vorrichtung (14) nach einem der vorherigen Ansprüche, **dadurch gekennzeichnet, dass** der Grundkörper (16) eine Vertiefung (36) aufweist, in welche ein Tischset, ein Platzset (40) oder dergleichen einbringbar ist.

11. Vorrichtung (14) nach einem der vorherigen Ansprüche, **dadurch gekennzeichnet, dass** der Grundkörper (16) zumindest eine zwischen der ersten Oberfläche (18) und der zweiten Oberfläche (20) verlaufende Randfläche (22) aufweist, an welcher Kopplungsmittel (58) zum Koppeln des Grundkörpers mit einem weiteren Grundkörper (16) angeordnet sind.

12. Vorrichtung (14) nach einem der vorherigen Ansprüche, **dadurch gekennzeichnet, dass** am Grundkörper (16) eine Antirutsch-Einrichtung (46) angeordnet ist.

13. Vorrichtung (14) nach Anspruch 12,
**dadurch gekennzeichnet, dass** die Antirutsch-Einrichtung (46) als ein geschlossenes Gummiband (47) ausgeführt ist oder dieses umfasst.

14. Kombination (101, 102, 103, 104, 105, 106, 107) umfassend
- zumindest ein Gefäß (12), welches mit einem magnetisierten oder magnetisierbaren Auflagekörper (34) verbunden ist, und
- eine Vorrichtung (14) nach einem der vorherigen Ansprüche.

15. Kombination (101, 102, 103, 104, 105, 106, 107) nach Anspruch 14,
**dadurch gekennzeichnet, dass** der Auflagekörper (34) mittels eines doppelseitigen Klebebands mit dem Gefäß (12) verbunden ist.

## Geänderte Patentansprüche

### Geänderte Patentansprüche gemäss Regel 137(2) EPÜ.

1. Kombination (101, 102, 103, 104, 105, 106, 107) umfassend
- zumindest einen Gegenstand (12), welcher mit einem magnetisierten oder magnetisierbaren Auflagekörper (34) verbindbar oder verbunden ist oder vom Auflagekörper (34) gebildet wird, und
- eine Vorrichtung, welche einen flächigen Grundkörper (16) mit einer ersten Oberfläche (18) und einer zweiten Oberfläche (20), wobei
o der Grundkörper (16) ist so gestaltet, dass er sowohl mit der ersten Oberfläche (18) als auch mit der zweiten Oberfläche (20) auf der Unterlage aufgelegt werden kann, und
o der zu stabilisierende Gegenstand (12) auf der ersten Oberfläche (18) und zweiten Oberfläche (20) abstellbar ist, welche von der Unterlage (24) weg zeigt, und
- zumindest eine im Grundkörper (16) angeordnete Magneteinheit (26) umfasst, welche
o mit dem Auflagekörper (34) zum Stabilisieren des auf der ersten Oberfläche (18) oder zweiten Oberfläche (20) abgestellten Gegenstands (12) zusammenwirkt,
**dadurch gekennzeichnet, dass**
- die Magneteinheit (26) derart ausgebildet ist, dass sie an der ersten Oberfläche (18) eine erste Magnetkraft und an der zweiten Oberfläche (20) eine zweite Magnetkraft auf den Auflagekörper (34) ausübt, wobei die erste Magnetkraft und die zweite Magnetkraft unterschiedlich groß sind.

2. Kombination (101, 102, 103, 104, 105, 106, 107) nach Anspruch 1,
**dadurch gekennzeichnet, dass** der Auflagekörper (34) mittels eines doppelseitigen Klebebands mit dem Gefäß (12) verbunden ist.

3. Kombination (101, 102, 103, 104, 105, 106, 107) nach einem der Ansprüche 1 oder 2,
**dadurch gekennzeichnet, dass** die Magneteinheit (26)
- einen ersten Magneten (28), welcher der ersten Oberfläche (18) zugeordnet ist und die erste Magnetkraft auf den Auflagekörper (34) des auf die erste Oberfläche abgestellten Gegenstand ausübt, und
- einen zweiten Magneten (30) umfasst, welcher der zweiten Oberfläche (20) zugeordnet ist und die zweite Magnetkraft auf den Auflagekörper (34) des auf die zweite Oberfläche abgestellten Gegenstand ausübt.

4. Kombination (101, 102, 103, 104, 105, 106, 107) nach Anspruch 3,
**dadurch gekennzeichnet, dass**
- der erste Magnet (28) bündig mit der ersten Oberfläche (18) und/oder
- der zweite Magnet (30) bündig mit der zweiten Oberfläche (20) abschließt.

5. Kombination (101, 102, 103, 104, 105, 106, 107) nach Anspruch 1,
**dadurch gekennzeichnet, dass** die Magneteinheit (26) einen Stabilisierungsmagnet (44) aufweist, welcher in einem ersten Abstand (A1) zur ersten Oberfläche (18) und einem zweiten Abstand (A2) zur zweiten Oberfläche (20) angeordnet ist oder angeordnet werden kann, wobei der erste Abstand (A1) und der zweite Abstand (A2) unterschiedlich groß sind.

6. Kombination (101, 102, 103, 104, 105, 106, 107) nach Anspruch 5,
**dadurch gekennzeichnet, dass** die Magneteinheit (26) einen im Grundkörper (16) angeordneten Hohlraum (60) umfasst, in welchem der Stabilisierungsmagnet (44) bewegbar angeordnet ist.

7. Kombination (101, 102, 103, 104, 105, 106, 107) nach Anspruch 6,
**dadurch gekennzeichnet, dass** die Magneteinheit (26) einen ersten Anschlag (62) zum Festlegen des ersten Abstands und einen zweiten Anschlag (64) zum Festlegen des zweiten Abstands umfasst.

8. Kombination (101, 102, 103, 104, 105, 106, 107) nach einem der Ansprüche 6 oder 7,
**dadurch gekennzeichnet, dass** die Magneteinheit (26) eine Führungseinrichtung (61) zum Führen des Stabilisierungsmagnets (44) im Hohlraum (60) aufweist.

9. Kombination (101, 102, 103, 104, 105, 106, 107) nach einem der vorherigen Ansprüche,
**dadurch gekennzeichnet, dass** im Grundkörper (16) ein Einschubschacht (48) angeordnet ist, in welchen
- ein Einschubkörper (50) zusammen mit der am Einschubkörper befestigbaren Magneteinheit (26) und/oder
- die Magneteinheit (26) als solche einbringbar ist.

10. Kombination (101, 102, 103, 104, 105, 106, 107) nach einem der vorherigen Ansprüche,
**dadurch gekennzeichnet, dass** im Grundkörper (16) zumindest ein Befestigungsabschnitt (66) zum Befestigen des Grundkörpers an einer Unterlage (24) angeordnet ist.

11. Kombination (101, 102, 103, 104, 105, 106, 107) nach einem der vorherigen Ansprüche,
**dadurch gekennzeichnet, dass** der Grundkörper (16) eine Vertiefung (36) aufweist, in welche ein Tischset, ein Platzset (40) oder dergleichen einbringbar ist.

12. Kombination (101, 102, 103, 104, 105, 106, 107) nach einem der vorherigen Ansprüche,
**dadurch gekennzeichnet, dass** der Grundkörper (16) zumindest eine zwischen der ersten Oberfläche (18) und der zweiten Oberfläche (20) verlaufende Randfläche (22) aufweist, an welcher Kopplungsmittel (58) zum Koppeln des Grundkörpers mit einem weiteren Grundkörper (16) angeordnet sind.

13. Kombination (101, 102, 103, 104, 105, 106, 107) nach einem der vorherigen Ansprüche,
**dadurch gekennzeichnet, dass** am Grundkörper (16) eine Antirutsch-Einrichtung (46) angeordnet ist.

14. Kombination (101, 102, 103, 104, 105, 106, 107)) nach Anspruch 13,
**dadurch gekennzeichnet, dass** die Antirutsch-Einrichtung (46) als ein geschlossenes Gummiband (47) ausgeführt ist oder dieses umfasst.
